Europäisches Patentamt

European Patent Office

Office européen des brevets

(11) Numéro de publication : **0 333 561 B1**

# FASCICULE DE BREVET EUROPEEN

(45) Date de publication du fascicule du brevet :
**12.05.93 Bulletin 93/19**

(51) Int. Cl.⁵ : **G01N 21/64**

(21) Numéro de dépôt : **89400656.8**

(22) Date de dépôt : **08.03.89**

(54) **Appareil et procédé de détection et de numération de particules fluorescentes, portées par un support solide.**

(30) Priorité : **08.03.88 FR 8802936**

(43) Date de publication de la demande :
**20.09.89 Bulletin 89/38**

(45) Mention de la délivrance du brevet :
**12.05.93 Bulletin 93/19**

(84) Etats contractants désignés :
**AT BE CH DE ES FR GB GR IT LI LU NL SE**

(56) Documents cités :
**US-A- 3 551 295**
**US-A- 4 162 405**
**US-A- 4 208 583**
**US-A- 4 284 897**
**PATENT ABSTRACTS OF JAPAN, vol. 10, no.**
**169 (P-468)[2225], 14 juin 1986, page 88 P 168;**
**& JP-A-61 20 839 (FUJI SHASHIN FILM K.K.)**
**29-01-1986**

(56) Documents cités :
**JOURNAL OF OPTICS, vol. 17, no. 6, décembre**
**1986, pages 259-269, Paris, FR; G. ROBLIN et**
**al.: "Etude d'un microscope optique à**
**balayage appliqué à la fluorimétrie"**
**ELECTRONIQUE APPLICATIONS, no. 45, jan-**
**vier 1986, pages 13-17, Paris, FR; J. TREMO-**
**LIERES: "Le comptage électronique des**
**bactéries"**
**PATENT ABSTRACTS OF JAPAN, vol. 9, no.**
**221 (P-386)[1944], 7 septembre 1985, page 163**
**P 386; & JP-A-60 80 745 (HITACHI SEISA-**
**KUSHO K.K.) 08-05-1985**

(73) Titulaire : **CHEMUNEX**
**41 rue du 11 novembre 1918**
**F-94700 Maisons-Alfort (FR)**

(72) Inventeur : **van Hoegaerden, Michel**
**29 Route de Bombon Bréau**
**F-77720 Mormant (FR)**

(74) Mandataire : **Ores, Irène et al**
**CABINET ORES 6, Avenue de Messine**
**F-75008 Paris (FR)**

Jouve, 18, rue Saint-Denis, 75001 PARIS

# Description

La présente invention est relative à un appareil de détection et de numération de particules fluorescentes ou rendues fluorescentes, portées par un support solide et à un procédé de détection desdites particules, à l'aide dudit appareil.

L'analyse qualitative et quantitative rapide de la présence de particules vivantes ou non vivantes aptes à être rendues fluorescentes (bactéries, levures, moisissures, parasites, pollen) ou naturellement fluorescentes (particules inorganiques, telles que l'amiante) dans des fluides liquides ou gazeux, des produits alimentaires ou des produits d'hygiène ainsi que la surveillance d'un processus de fermentation, au cours de sa réalisation s'avèrent très utiles. Les méthodes habituellement utilisées dans le cas des particules vivantes sont basées sur la détection visuelle du développement des micro-organismes dans des milieux appropriés, après filtration sur membrane, permettant de concentrer lesdites particules à détecter ; la membrane est ensuite déposée en gélose ; les particules éventuellement présentes se multiplient alors, les colonies en résultant devenant visibles dans un délai de 2 à 30 jours.

Cette méthode a l'inconvénient d'être longue à mettre en oeuvre, de comprendre plusieurs étapes, de ne pas permettre une numération précise, et de ne pas identifier l'espèce ou le genre des particules présentes. De plus, cette méthode ne permet pas de détecter des particules non vivantes (amiante) présentes notamment dans l'air.

Compte-tenu des délais nécessaires pour la détection de micro-organismes par la méthode ci-dessus décrite, diverses méthodes ont été développées pour fournir une estimation rapide de la flore microbienne. Ces méthodes sont généralement basées sur la mesure d'un paramètre reflètant l'évolution de la flore vivante présente (consommation de sucres, libération de $CO_2$, augmentation de la turbidité, changement de l'impédance du milieu, libération d'ATP, etc...). Ces méthodes présentent le désavantage majeur de fournir une valeur relative à une population standard. Ce standard n'est jamais connu dans les cas de contaminations. Ces méthodes nécessitent également une multiplication des germes contaminants pour obtenir un signal significatif, ce qui impose des délais importants pour l'obtention des résultats et ne permet pas la détection de petits nombres de micro-organismes.

D'autres méthodes de détection ont été proposées et permettent la détection fluorescente d'objets. Par exemple :
- le résumé du Brevet japonais n° 61 20839, déposé le 29 janvier 1986, au nom de FUJI SHASHIN FILM K.K., paru dans Patent Abstracts of Japan, 1986, vol. 10, n° 169 (P-468) (2225), décrit un compteur de bactéries qui a pour objet de détecter exactement les bactéries par l'adsorption du produit de la réaction de la bactérie, par l'électricité statique sur une plaque et par balayage par un rayon laser.
- l'article paru dans Journal of Optics, vol. 17, n° 6, décembre 1986, pages 259-269, décrit un microscope optique à balayage, appliqué à la fluorimétrie. Ce document décrit un appareil d'optique, qui permet d'une part l'affichage d'une image de l'objet à analyser et d'autre part l'affichage simultané d'une image sur fond noir des seules zones fluorescentes.

Le problème se pose de fournir un procédé et un appareil de détection de particules vivantes, permettant une détection directe, rapide, sensible, facile à mettre en oeuvre et peu coûteuse desdites particules dans un fluide ou un milieu donné, notamment liquide ou semi-liquide.

De même, le problème se pose de fournir un procédé et un appareil de détection de particules non vivantes ou inorganiques, permettant une détection directe et rapide des agents polluants présents dans l'air, en particulier.

En conséquence, la présente invention s'est donné pour but de pourvoir à un appareil de détection de particules vivantes, mortes ou inorganiques, qui répond mieux aux besoins de la pratique, en permettant une détection et une numération immédiate desdites particules directement sur un support solide, sans avoir à effectuer notamment une mise en culture des particules vivantes portées par ce dernier.

La présente invention a pour objet un appareil de détection et de numération de particules, présentes normalement, ou éventuellement contenues en tant que contaminants, dans un fluide liquide ou gazeux, ou dans un produit, notamment alimentaire ou d'hygiène, par fluorimétrie, comprenant une source lumineuse, au moins un moyen de détection pour la détection de la lumière fluorescente émise par des particules fluorescentes présentes et pour générer un signal électrique, un support desdites particules et des moyens de balayage de la surface dudit support par ledit faisceau lumineux, lequel appareil est caractérisé :
- * en ce qu'il comprend outre des moyens de focalisation du faisceau issu de ladite source lumineuse :
  - un moyen de production de signaux de position coopérant avec lesdits moyens de balayage, pour générer un signal électrique correspondant à la position du faisceau sur le support et
  - un microprocesseur de traitement relié de manière opérationnelle au(x)dit(s) détecteur(s) et audit moyen de production des signaux de position, et pourvu d'au moins un moyen d'enregistrement et de comptage simultané des signaux électriques transmis par le/les dispositif(s) de détection et le système de balayage, de telle sorte que la position et une estimation de la taille de chaque particule détectée et/ou comptée est simultanément enregistrée,

*   en ce que lesdits moyens de balayage balaient la totalité de la surface à analyser.

La connaissance de la position d'une particule donnée permet son identification par prélèvement direct ou autre méthode in situ.

Selon un mode de réalisation avantageux dudit appareil, les moyens de balayage comprennent un premier miroir oscillant dont l'axe d'oscillation est perpendiculaire à l'axe du faisceau lumineux, ledit premier miroir assurant le balayage rapide d'une ligne par ledit faisceau, et un second miroir dont l'axe est perpendiculaire à l'axe d'oscillation dudit premier miroir.

Selon un aspect de l'invention, ledit second miroir est animé d'un mouvement de balayage lent synchronisé avec le mouvement de balayage du premier miroir, l'incrément de déplacement de la tâche lumineuse - produite par la rencontre du faisceau lumineux avec le support solide - sur le support solide, étant sensiblement de l'ordre de grandeur du diamètre de cette tâche lumineuse, ledit second miroir assurant le balayage de la surface totale du support à analyser par ledit faisceau, en lignes successives.

Selon une disposition avantageuse de cet aspect de l'invention, les moyens de balayage comprennent en outre un troisième miroir, dichroïque, situé sur le trajet du faisceau réfléchi par le second miroir et qui dévie ledit faisceau vers le support à analyser.

Un tel miroir dichroïque laisse passer la/les lumières fluorescentes émises par les particules à détecter lesdites lumières fluorescentes étant alors captées par le/les moyens de détection.

Selon une autre disposition avantageuse de cet aspect de l'invention, l'appareil comprend, de plus, en amont du/des moyens de détection de la lumière fluorescente, au moins un autre miroir dichroïque, situé sur le trajet desdites lumières fluorescentes, qui divise lesdites lumières en leurs composantes.

Selon un autre aspect de l'invention, ledit second miroir est un miroir dichroïque fixe et le balayage de la surface totale du support à analyser par le faisceau lumineux est assuré par une platine portant ledit support et animée d'un mouvement de translation synchronisé avec le mouvement de balayage du premier miroir, et dont le pas est sensiblement de l'ordre de grandeur du diamètre de la tâche lumineuse produite sur le support.

Conformément à une réalisation de l'invention la source lumineuse est un faisceau laser.

En variante, les moyens de balayage comprennent deux systèmes acousto-optiques, l'un des systèmes assurant le balayage par le faisceau lumineux, d'une ligne du support à analyser, le deuxième système acousto-optique assurant le balayage de la surface totale dudit support, ledit deuxième système étant synchronisé avec le premier système.

Selon un autre mode de réalisation avantageux de cet appareil, le support est un support filtrant continu ou discontinu, notamment une membrane filtrante, d'une surface de l'ordre et de préférence supérieure à 1 cm².

Ledit support filtrant n'est pas, lui-même, fluorescent et la dimension des pores varie entre environ 0,2 μm et 0,2 mm, selon le type de particules à retenir.

Selon un autre mode de réalisation avantageux dudit appareil, le support solide est un support non filtrant continu ou discontinu.

Le dispositif de détection des signaux de fluorescence émis par les particules marquées, comprend de manière connue au moins un filtre optique, au moins un photo-multiplicateur ou au moins un photodétecteur de conversion desdits signaux lumineux et d'acheminement des signaux électriques correspondants vers un microprocesseur de traitement et de comptage, lequel traitement fournit des tracés.

L'appareil selon l'invention est utilisé aussi bien pour la détection et la numération d'une seule sorte de particules marquées vivantes ou mortes, que de plusieurs sortes de particules marquées vivantes ou mortes ; dans une telle utilisation, les particules sont marquées par des colorants d'identification différents, de sorte que lesdites particules réémettent une lumière fluorescente de longueur d'onde différente selon le colorant d'identification de départ.

La présente invention a également pour objet un procédé de détection et de numération de particules présentes normalement, ou éventuellement contenues en tant que contaminants, dans tout milieu approprié notamment un fluide liquide ou gazeux ou dans un produit, notamment alimentaire ou d'hygiène, comprenant le dépôt desdites particules sur un support, le balayage par un faisceau lumineux de la surface dudit support qui porte lesdites particules, l'enregistrement des signaux de fluorescence émis par lesdites particules, lequel procédé est caractérisé en ce que :

-   lesdites particules sont rendues fluorescentes à l'aide d'au moins un colorant approprié choisi dans le groupe qui comprend les colorants vitaux, les colorants de viabilité positive et des substances fluorescentes portées par des anticorps et/ou des sondes nucléiques, et
-   en ce qu'il comprend pour la détection et le comptage précis à l'unité près desdites particules, outre la détection et l'enregistrement des signaux de fluorescence émis par lesdites particules :

    . la production d'un signal électrique de position correspondant à la position du faisceau sur la surface du support,

    . l'enregistrement et le comptage des signaux électriques détectés résultant de la fluorescence des particules

. et l'enregistrement des signaux de position, de telle sorte que chaque particule présente à la surface dudit support est comptée et que sa position est simultanément enregistrée.

On entend par colorant de viabilité positive un colorant qui a la propriété de ne rendre fluorescentes que des particules vivantes.

Selon un mode de mise en oeuvre avantageux du procédé conforme à l'invention, les particules à analyser sont déposées, au cours de la première étape, sur un support filtrant continu ou discontinu d'une surface de l'ordre et de préférence supérieure à 1 cm², notamment une membrane filtrante, par filtration de l'échantillon à analyser.

Selon une disposition avantageuse de ce mode de mise en oeuvre, on procède d'abord à une solubilisation de l'échantillon en vue de l'étape de filtration.

Selon un autre mode de mise en oeuvre avantageux du procédé conforme à l'invention, les particules à analyser sont déposées, au cours de la première étape, sur un support solide non filtrant continu ou discontinu, notamment une lame du type de celles utilisées en microscopie optique.

Selon un autre mode de mise en oeuvre avantageux, les particules sont rendues fluorescentes préalablement à leur dépôt sur ledit support solide.

Selon encore un mode de mise en oeuvre avantageux du procédé conforme à l'invention, les particules sont rendues fluorescentes in situ, c'est-à-dire sur le support solide.

Comme moyen de marquage desdites particules, l'invention prévoit de faire application du procédé de marquage décrit dans la Demande de Brevet déposée au nom de la Demanderesse, concurrement à la présente Demande, pour autant qu'il concerne le marquage de micro-organismes par un colorant de viabilité positive.

Selon un autre mode de mise en oeuvre avantageux du procédé conforme à l'invention, les anticorps sont choisis dans le groupe qui comprend les anticorps polyclonaux et/ou monoclonaux, mono ou polyspécifiques, anti-levures et/ou anti-bactéries et/ou anti-moisissures et/ou anti-parasites et/ou anti-virus et/ou anti-cellules animales et/ou anti-cellules végétales et les anticorps polyclonaux et/ou monoclonaux, mono ou polygénériques anti-levures et/ou anti-bactéries et/ou anti-moisissures et/ou anti-parasites et/ou anti-virus et/ou anti-cellules animales et/ou anti-cellules végétales, notamment anti-pollen.

L'invention s'applique de manière particulièrement avantageuse à la détection de particules comme les cellules animales ou végétales ou les micro-organismes, notamment les levures, les bactéries, les moisissures, les parasites et les virus, ainsi que les particules inorganiques telles que l'amiante.

Le marquage desdites particules à l'aide de colorants a l'avantage de permettre :

- la détection et la numération simultanée de particule de types différents et,
- la différenciation des particules vivantes, mortes ou inorganiques.

Outre les dispositions qui précèdent, l'invention comprend encore d'autres dispositions, qui ressortiront de la description qui va suivre, qui se réfère à des exemples de mises en oeuvre du procédé conforme à l'invention et à une description détaillée de l'appareil de détection selon l'invention, avec référence aux dessins annexés, qui illustrent trois modes de réalisation d'un appareil conforme à l'invention et dans lesquels :

- la figure 1 représente schématiquement un mode de réalisation d'un appareil de détection de parti cules marquées, conforme à l'invention, et dont les moyens de balayage comprennent deux miroirs oscillants ;
- la figure 2 représente schématiquement un autre mode de réalisation d'un appareil de détection de particules marquées, conforme à l'invention, et dont les moyens de balayage comprennent deux miroirs oscillants associés à au moins un miroir dichroïque ;
- la figure 3 représente schématiquement un autre mode de réalisation de l'appareil de détection de particules marquées, conforme à l'invention et dont les moyens de balayage comprennent un miroir oscillant, un miroir dichroïque et une platine de translation ;
- la figure 4 représente des tracés obtenus avec le mode de réalisation décrit dans la figure 1, les particules étant des billes de latex fluorescentes ;
- les figures 5 et 6 représentent des tracés obtenus avec le mode de réalisation selon la figure 2, les particules étant des levures colorées par un colorant de viabilité positive approprié.
- la figure 7 représente les tracés obtenus avec le mode de réalisation selon la figure 2, les particules étant des bactéries colorées par un colorant approprié.

Il doit être bien entendu, toutefois, que ces dessins et les parties descriptives correspondantes ainsi que les exemples, sont donnés uniquement à titre d'illustration de l'objet de l'invention, dont ils ne constituent en aucune manière une limitation.

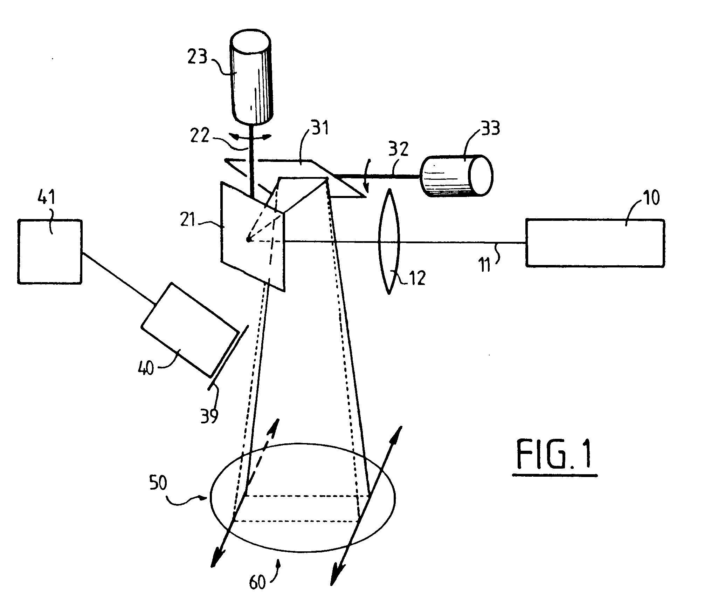

Les appareils représentés aux figures 1, 2 et 3 sont destinés à la détection et à la numération de particules marquées, éventuellement présentes dans un fluide liquide ou gazeux ou un produit.

La figure 1 représente un appareil de détection de particules vivantes, mortes ou inorganiques, conforme à l'invention et dont les moyens de balayage comprennent deux miroirs oscillants.

Cet appareil comprend une source lumineuse 10, délivrant un faisceau lumineux 11, focalisé au moyen d'une lentille 12, des moyens de balayage comprenant un premier miroir 21 oscillant, et dont l'axe d'oscillation 22 est perpendiculaire à l'axe du faisceau lumineux, l'oscillation dudit premier miroir 21 étant assurée par un élément moteur 23, réalisé par exemple, mais non limitativement, sous la forme d'un galvanomètre ; un deuxième miroir 31, dont l'axe de rotation 32 est perpendiculaire à l'axe d'oscillation dudit premier miroir 21, ledit second miroir 31 étant animé d'un mouvement angulaire par incréments au moyen d'un élément moteur 33, ledit mouvement étant synchronisé avec le mouvement de balayage du premier miroir 21.

La combinaison des miroirs 21, 31 permet le balayage ligne par ligne de la surface totale du support solide 50 à analyser, par le faisceau lumineux 11.

Le support 50 est, dans la réalisation représentée, une membrane filtrante qui retient, en fonction de la dimension de ses pores, les particules 60 présentes dans le fluide ou produit, préalablement traité de manière appropriée et filtré sur ledit support 50.

Les particules 60 qui peuvent être détectées et comptées sur la membrane filtrante peuvent être des cellules animales, des cellules végétales, notamment du pollen, des micro-organismes notamment des levures, des bactéries, des moisissures, des parasites ou des virus, ou des particules inorganiques telles que de l'amiante.

Ces particules sont avantageusement marquées *in situ*, sur la membrane filtrante, au moyen d'un colorant vital et/ou de viabilité et/ou un anticorps rendu fluorescent approprié et/ou une sonde nucléique rendue fluorescente appropriée, ledit marquage permettant la détection et la numération simultanée de particules de types différents, leur viabilité étant également évaluée par ledit marquage, lesdites particules réémettant de la lumière fluorescente visible à des longueurs d'ondes différentes, en fonction du colorant et/ou de l'anticorps et/ou de la sonde nucléique marqués, utilisés.

Les signaux de fluorescences émis par les particules sont alors détectés au moyen d'un/de détecteurs de fluorescence 40, qui peuvent être notamment des photomultiplicateurs ou des photodiodes, convertissant les signaux lumineux en impulsions électriques dont le traitement par un microprocesseur 45 fournit le comptage recherché.

Un filtre optique 39 permet de sélectionner la gamme de longueurs d'ondes adéquates.

Le microprocesseur de traitement 45 est en outre pourvu de moyens d'enregistrement simultané des signaux électriques transmis par le dispositif de détection 40 et par le système de balayage 21,31, de sorte que l'appareil fournit, outre le comptage souhaité, la position de chaque particule sur le support, permettant par exemple, son prélèvement.

De bons résultats ont été obtenus lorsque la lentille 12 a une distance focale de 70 mm et est placée à 10 cm de la source lumineuse 10 représentée par un laser, d'une longueur d'onde de 488 nm et dont le faisceau lumineux 11 à un diamètre initial de 650 μm, de manière à obtenir une tâche lumineuse 13 d'un diamètre d'environ 20 μm sur le support 50.

La fréquence d'oscillation du miroir 21 est de 5 Hertz, obtenue au moyen d'un déflecteur galvanométrique 23.

L'incrément obtenu grâce au miroir 31 est sensiblement de l'ordre de grandeur du diamètre de la tâche lumineuse 13.

Le support 50 est dans la réalisation représentée, une membrane filtrante d'un diamètre de 47 mm et dont un carré de coté X = 30 mm est exploré.

La distance d entre la lentille 12 et le premier miroir oscillant 21 est de 10 mm ; la distance D entre les deux miroirs oscillants est de 10 mm ; la distance L entre le deuxième miroir oscillant 31 et le filtre 50 portant les particules 60 est de 50 mm.

Le photomultiplicateur 40 se trouve à 50 mm du support 50 ; un filtre optique 39 est interposé entre le support 50 et le photomultiplicateur 40.

L'amplitude $\alpha_R$ du premier miroir oscillant est de

$$\pm \frac{X/2}{L+D}.$$

Le débattement du deuxième miroir est de $\alpha L$

$$= \pm \frac{X/2}{L}.$$

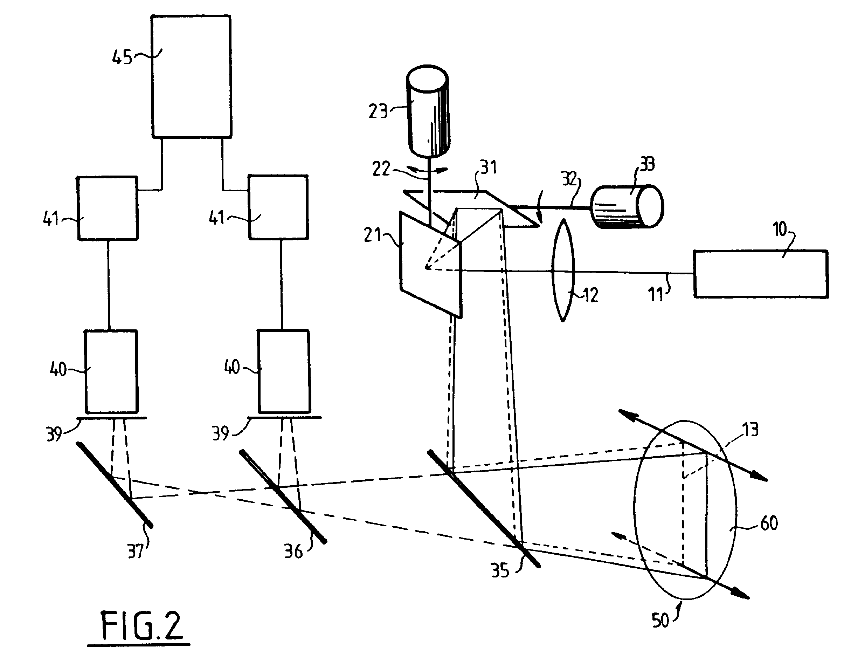

On se réfère maintenant à la figure 2 qui représente un appareil de détection de particules vivantes, mortes ou inorganiques, conforme à l'invention et dont les moyens de balayage comprennent deux miroirs oscillants associés à au moins un miroir dichroïque.

Cet appareil comprend une source lumineuse 10, qui produit un faisceau lumineux 11, focalisé au moyen d'une lentille 12, des moyens de balayage comprenant :

. un premier miroir oscillant 21, et dont l'axe d'oscillation 22 est perpendiculaire à l'axe du faisceau lumineux, l'oscillation dudit premier miroir 21, étant assurée par un élément moteur 23 ;

. un deuxième miroir 31, dont l'axe de rotation 32 est perpendiculaire à l'axe d'oscillation dudit premier miroir 21, ledit second miroir étant animé d'un mouvement angulaire par incréments au moyen d'un élément moteur 33, ledit mouvement étant synchronisé avec le mouvement de balayage du premier miroir 21 ;

. un troisième miroir dichroïque 35 qui reçoit le faisceau lumineux réfléchi par le miroir 31 et qui le renvoie sur le support 50. La combinaison des miroirs 21, 31, 35 permet le balayage ligne par ligne de la surface totale du support solide 50 à analyser, par le faisceau 11.

Le fluide est traité et les particules sont marquées comme spécifié ci-dessus en référence à la figure 1.

Les signaux de fluorescence émis par les particules 60 sont alors détectés, au moyen des détecteurs de fluorescence 40, qui peuvent être notamment des photomultiplicateurs ou des photodiodes convertissant les signaux lumineux en impulsions électriques, associés dans la réalisation représentée, au miroir dichroïque 36 qui divise la lumière fluorescente en ses composantes de différentes longueurs d'onde, la fluorescence de plus grande longueur d'onde étant réfléchie par un miroir 37. Les filtres optiques 39 permettent de sélectionner la gamme de longueur d'ondes adéquates.

Les moyens de détection 40 sont associés à des discriminateurs 41 et le traitement numérique des données est réalisé à l'aide du microprocesseur de traitement 45 qui fournit le comptage recherché. Le microprocesseur de traitement 45 est, en outre, pourvu de moyens d'enregistrement simultané des signaux électriques transmis par les dispositifs de détection 40 et par le système de balayage 21, 31, 35, de sorte que l'appareil fournit, outre le comptage souhaité, la position de chaque particule sur le support, permettant par exemple son prélèvement.

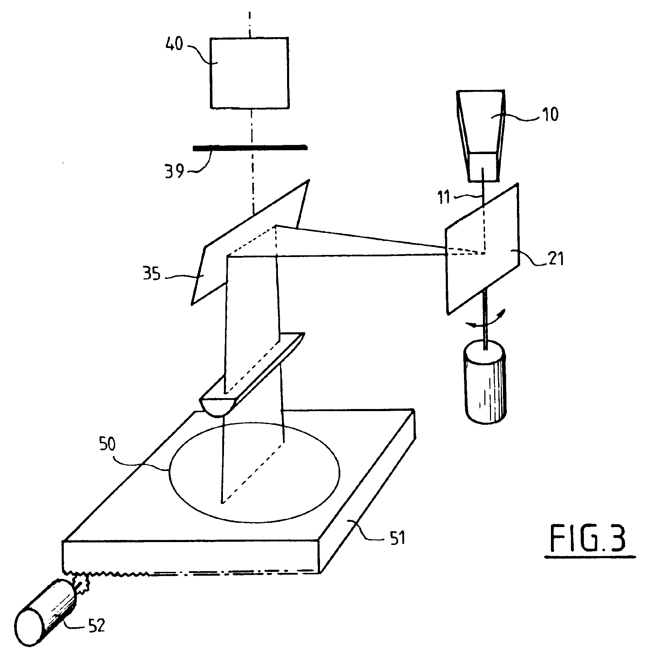

On se réfère maintenant à la figure 3 qui représente un appareil de détection de particules vivantes, mortes ou inorganiques, conforme à l'invention, et dont les moyens de balayage comprennent un miroir oscillant et un miroir dichroïque.

Cet appareil comprend une source lumineuse 10, identique à celle de l'appareil représenté sur la figure 1, ladite source étant située selon un axe parallèle au support 50 ; dans ce mode de réalisation, les moyens de balayage comprennent un miroir oscillant 21 du même type que celui décrit dans la figure 1, un miroir dichroïque fixe 35, réfléchissant totalement la lumière à une certaine longueur d'onde mais laissant passer au travers une lumière de longueur d'onde plus élevée telle que de la lumière fluorescente.

Le balayage de la surface totale du support 50 à analyser par le faisceau lumineux 11, est dans cette réalisation, assuré par une platine 51 portant ledit support 50, animée d'un mouvement de translation synchronisé avec le mouvement de balayage du miroir 21, et dont le pas est sensiblement de l'ordre de grandeur du diamètre de la tâche lumineuse 13.

La focalisation du faisceau 11 est assurée par une lentille semi-cylindrique 36 dont la longueur est au moins égale à la longueur de la ligne à balayer sur le support 50.

Ledit mouvement de translation est assuré au moyen d'un moteur pas à pas 52.

Le support 50 est, dans la réalisation représentée mais non exclusivement, une membrane filtrante.

Le produit ou fluide à analyser est traité, filtré et marqué comme décrit en référence à la figure 1.

Ainsi, le faisceau lumineux 11 balaie toute la surface inscrite dans le support à analyser, définie par la platine.

Les particules 60 marquées réémettent de la lumière fluorescente, qui est détectée au moyen du photomultiplicateur 40, après passage par le filtre 39, ledit photomultiplicateur convertissant les signaux lumineux en impulsions électriques ; les signaux électriques sont ensuite enregistrés et traités pour caractériser et compter les particules 60 présentes.

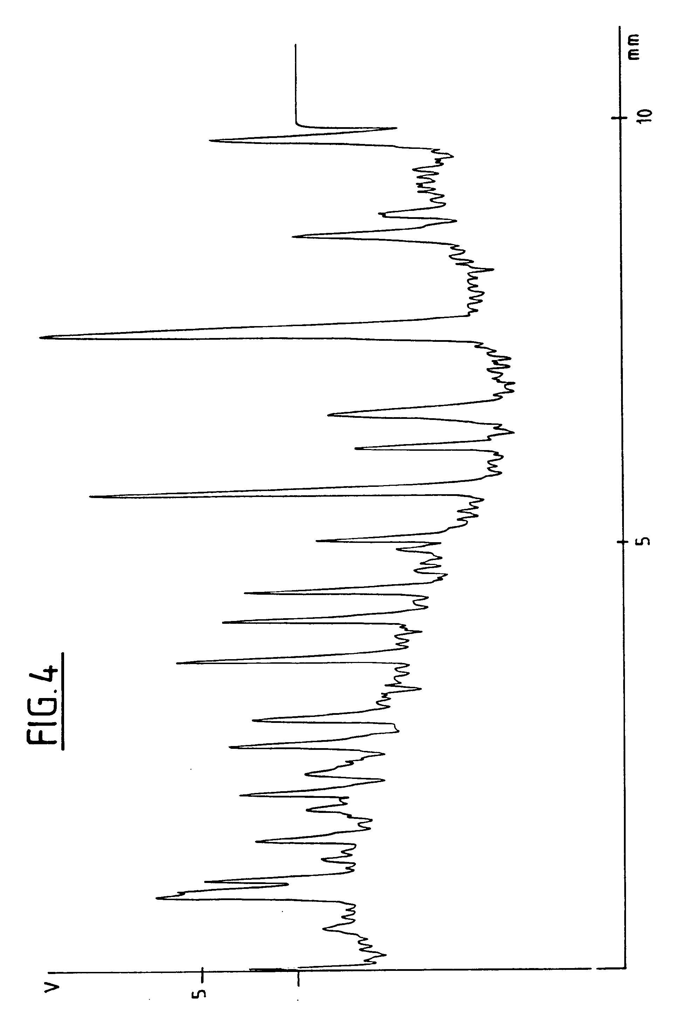

L'installation selon la figure 1 a permis l'enregistrement de tracés représentés à la figure 4.

La figure 4 représente le tracé obtenu pour des billes de latex fluorescentes de 2,13 μm dans un diagramme où l'axe des abscisses correspond aux distances sur le filtre en mm et l'axe des ordonnées aux différences de potentiel en volts proportionnelles à l'intensité de lumière émise par les particules.

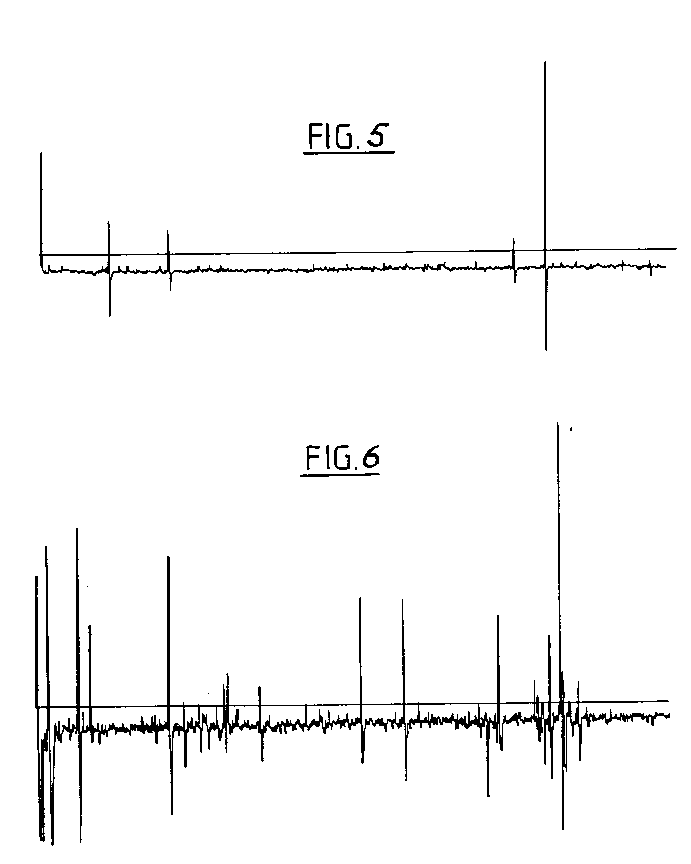

Les figures 5 et 6 représentent la détection de levures vivantes (*Saccharomyces cerevitiae*) colorées à l'aide d'un colorant de viabilité approprié.

L'installation selon la figure 2 a permis l'enregistrement de tracés représentés aux figures 5 et 6.

Les levures vivantes provenant d'une culture pure sont déposées sur une membrane par filtration. Après un lavage rapide, une solution du colorant de viabilité appropriée à 45°C est mise en contact pendant 5 mn puis le colorant est éliminé par filtration, la membrane est lavée et ensuite montée dans l'appareil de détection conforme à l'invention.

Dans la figure 5, on détecte 4 cellules ; dans la figure 6, la concentration en levures est plus élevée.

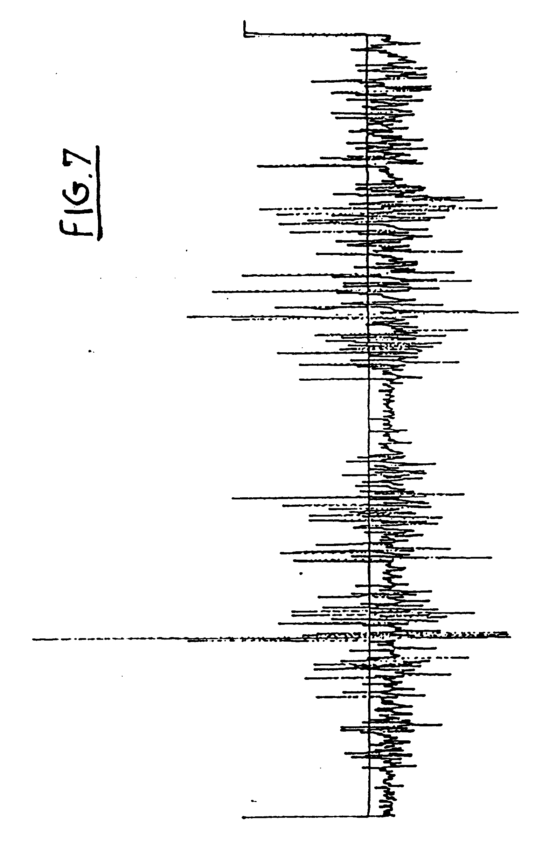

La figure 7 représente la détection de bactéries vivantes (*Lactobacillus brevis*), colorées à l'aide d'un colorant de viabilité approprié.

Ainsi que cela ressort de ce qui précède, l'invention ne se limite nullement à ceux de ces modes de mises en oeuvre, de réalisation et d'application qui viennent d'être décrits de façon plus explicite ; elle en embrasse au contraire toutes les variantes qui peuvent venir à l'esprit du technicien en la matière, sans s'écarter du cadre, ni de la portée de la présente invention.

**Revendications**

1. Appareil de détection et de numération de particules, présentes normalement, ou éventuellement contenues en tant que contaminants, dans un fluide liquide ou gazeux, ou dans un produit, alimentaire ou d'hygiène, par fluorimétrie, comprenant une source lumineuse (10), au moins un moyen de détection (40) pour la détection de la lumière fluorescente émise par des particules fluorescentes (60) présentes et pour générer un signal électrique, un support (50) desdites particules et des moyens de balayage (21, 31, 35) de la surface dudit support par ledit faisceau lumineux, caractérisé :

    * en ce qu'il comprend outre des moyens de focalisation (12) du faisceau issu de ladite source lumineuse :

      - un moyen de production de signaux de position coopérant avec lesdits moyens de balayage, pour générer un signal électrique correspondant à la position du faisceau sur le support et

      - un microprocesseur (45) de traitement relié de manière opérationnelle au(x)dit(s) détecteur(s) et audit moyen de production des signaux de position, et pourvu d'au moins un moyen d'enregistrement et de comptage simultané des signaux électriques transmis par le/les dispositif(s) de détection (40) et le système de balayage (21, 31, 35), de telle sorte que la position et une estimation de la taille de chaque particule détectée et/ou comptée est simultanément enregistrée,

    * en ce que lesdits moyens de balayage balaient la totalité de la surface à analyser.

2. Appareil selon la revendication 1, caractérisé en ce que les moyens de balayage comprennent un premier miroir oscillant (21) dont l'axe d'oscillation (22) est perpendiculaire à l'axe du faisceau lumineux (11), ledit premier miroir assurant le balayage rapide d'une ligne par ledit faisceau, et un second miroir (31) dont l'axe (32) est perpendiculaire à l'axe d'oscillation dudit premier miroir.

3. Appareil selon la revendication 1 ou la revendication 2, caractérisé en ce que ledit second miroir (31) est animé d'un mouvement de balayage lent synchronisé avec le mouvement de balayage du premier miroir, l'incrément du déplacement de la tâche lumineuse (13) - produite par la rencontre du faisceau lumineux (11) avec le support solide (50) - sur le support solide, étant sensiblement de l'ordre de grandeur du diamètre de cette tâche lumineuse, ledit second miroir assurant le balayage de la surface totale du support à analyser par ledit faisceau, en lignes successives.

4. Appareil selon l'une quelconque des revendications 1 à 3, caractérisé en ce que les moyens de balayage comprennent en outre un troisième miroir, dichroïque (35), situé sur le trajet du faisceau réfléchi par le second miroir (31) et qui dévie ledit faisceau vers le support (50) à analyser.

5. Appareil selon l'une quelconque des revendications 1 à 4, caractérisé en ce qu'il comprend de plus, en amont du/des moyens de détection (40) de la lumière fluorescente, au moins un autre miroir dichroïque (36), situé sur le trajet desdites lumières fluorescentes, qui divise lesdites lumières en leurs composantes.

6. Appareil selon la revendication 1 ou la revendication 3, caractérisé en ce que ledit second miroir (35) est un miroir dichroïque fixe, le balayage de la surface totale du support (50) à analyser par le faisceau lumineux (11) étant assuré par une platine de translation (51) portant ledit support, animée d'un mouvement de translation synchronisé avec le mouvement de balayage du premier miroir (21), et dont le pas est sensiblement de l'ordre de grandeur du diamètre de la tâche lumineuse (13).

7. Appareil selon l'une quelconque des revendications 1 à 6, caractérisé en ce que la source lumineuse (10) est un faisceau laser.

8. Appareil selon la revendication 1, caractérisé en ce que les moyens de balayage comprennent deux systèmes acousto-optiques, l'un des systèmes assurant le balayage par le faisceau lumineux, d'une ligne du support à analyser, le deuxième système acousto-optique assurant le balayage de la surface totale dudit support, ledit deuxième système étant synchronisé avec le premier système.

9. Appareil selon l'une quelconque des revendications 1 à 8, caractérisé en ce que le support (50) est un support filtrant, continu ou discontinu, notamment une membrane filtrante d'une surface de l'ordre et de préférence supérieure à 1 cm².

10. Appareil selon l'une quelconque des revendication 1 à 8, caractérisé en que le support (50) solide est un support non filtrant continu ou discontinu.

11. Procédé de détection et de numération de particules présentes normalement, ou éventuellement contenues en tant que contaminants, dans tout milieu approprié notamment un fluide liquide ou gazeux ou dans un produit, alimentaire ou d'hygiène, comprenant le dépôt desdites particules (60) sur un support (50), le balayage par un faisceau lumineux de la surface dudit support qui porte lesdites particules, l'enregistrement des signaux de fluorescence émis par lesdites particules, lequel procédé est caractérisé en ce que :

    - lesdites particules sont rendues fluorescentes à l'aide d'au moins un colorant approprié choisi dans le groupe qui comprend les colorants vitaux, les colorants de viabilité positive et des substances fluorescentes portées par des anticorps et/ou des sondes nucléiques, et

- en ce qu'il comprend pour la détection et le comptage précis à l'unité près desdites particules, outre la détection et l'enregistrement des signaux de fluorescence émis par lesdites particules :
  . la production d'un signal électrique de position correspondant à la position du faisceau sur la surface du support (50),
  . l'enregistrement et le comptage des signaux électriques détectés résultant de la fluorescence des particules
  . et l'enregistrement des signaux de position, de telle sorte que chaque particule présente à la surface dudit support est comptée et que sa position est simultanément enregistrée.

12. Procédé selon la revendication 11, caractérisé en ce que les particules à analyser sont déposées, au cours de la première étape, sur un support filtrant continu ou discontinu d'une surface supérieure à 1 cm², notamment une membrane filtrante, par filtration de l'échantillon à analyser.

13. Procédé selon la revendication 11 ou la revendication 12, caractérisé en ce que l'on procède d'abord à une solubilisation de l'échantillon, en vue de l'étape de filtration.

14. Procédé selon la revendication 11, caractérisé en ce que les particules à analyser sont déposées, au cours de la première étape, sur un support solide non filtrant continu ou discontinu, notamment une lame du type de celles utilisées en microscopie optique.

15. Procédé selon l'une quelconque des revendications 11 à 14, caractérisé en ce que les particules sont rendues fluorescentes préalablement à leur dépôt sur ledit support solide.

16. Procédé selon l'une quelconque des revendications 11 à 14, caractérisé en ce que les particules sont rendues fluorescentes in situ, c'est-à-dire sur le support solide.

17. Procédé selon l'une quelconque des revendications 11 à 16, caractérisé en ce que les anticorps sont choisis dans le groupe qui comprend les anticorps polyclonaux et/ou monoclonaux, mono ou polyspécifiques, anti-levures et/ou anti-bactéries et/ou anti-moisissures et/ou anti-parasites et/ou anti-virus et/ou anti-cellules animales et/ou anti-cellules végétales et les anticorps polyclonaux et/ou monoclonaux, mono ou polygénériques anti-levures et/ou anti-bactéries et/ou anti-moisissures et/ou anti-parasites et/ou anti-virus et/ou anti-cellules animales et/ou anti-cellules végétales, notamment anti-pollen.

## Claims

1. Apparatus for detecting and counting particles which are normally present or may be contained as contaminants in a liquid or gaseous fluid or in a food product or hygiene product, by fluorimetry, comprising a light source (10), at least one means (40) for detecting the fluorescent light emitted by the fluorescent particles (60) present and for generating an electrical signal, a support (50) for said particles and means (21, 31,35) for sweeping the surface of said support by said light beam, characterised in that it comprises, apart from means (12) for focusing the beam coming from said light source:
   - means for producing positional signals cooperating with said sweeping means in order to generate an electrical signal corresponding to the position of the beam on the support and
   - a treatment microprocessor (45) operationally connected to said detector(s) and to said means for producing the positional signals, and equipped with at least one means for simultaneously recording and counting the electrical signals transmitted by the detection apparatus (40) and the sweeping system (21,31, 35), so that the position and an estimation of the size of each particle detected and/or counted is simultaneously recorded,
   and in that said sweeping means sweeps the entire surface to be analysed.

2. Apparatus according to claim 1, characterised in that the sweeping means comprises a first oscillating mirror (21) the oscillation axis (22) of which is perpendicular to the axis of the light beam (11), said first mirror ensuring that a line is rapidly swept by said beam, and a second mirror (31) the axis (32) of which is perpendicular to the axis of oscillation of said first mirror.

3. Apparatus according to claim 1 or 2, characterised in that said second mirror (31) performs a slow sweeping movement synchronised with the sweeping movement of the first mirror, the increment in the movement of the spot of light (13) - produced by the light beam (11) meeting the solid support (50) - on the solid support being substantially of the order of magnitude of the diameter of said spot of light, said second mirror sweeping the entire surface of the support which is to be analysed by said beam, in successive lines.

4. Apparatus according to any one of claims 1 or 3, characterised in that the sweeping means further comprise a third mirror which is dichroic (35), located on the path of the beam reflected by the second mirror (31), to divert said beam towards the support (50) which is to be analysed.

5. Apparatus according to any one of claims 1 or 4, characterised in that it further comprises, upstream of the means (40) for detecting the fluorescent light, at least one other dichroic mirror (36) situated on the path of said fluorescent lights, which divides said lights into their components.

6. Apparatus according to claim 1 or claim 3, characterised in that said second mirror (35) is a fixed dichroic mirror, the sweeping of the total surface of the support (50) to be analysed by the light beam (11) being carried out by a horizontally movable plate (51) which carries said support and which performs a horizontal movement synchronised with the sweeping movement of the first mirror (21), the pitch of which is of substantially the same order of magnitude as the diameter of the spot of light (13).

7. Apparatus according to any one of claims 1 to 6, characterised in that the light source (10) is a laser beam.

8. Apparatus according to claim 1, characterised in that the sweeping means comprises two acousto-optical systems, one of the systems carrying out the sweeping of a line of the support to be analysed by the light beam whilst the second acousto-optical system carries out the sweeping of the total surface of said support, said second system being synchronised with the first system.

9. Apparatus according to any of claims 1 or 8, characterised in that the support (50) is a filter support, either continuous or discontinuous, notably a filtering membrane having a surface area of the order of, preferably greater than, 1 cm².

10. Apparatus according to any one of claims 1 or 8, characterised in that the solid support (50) is a continuous or discontinuous non-filtering support.

11. A process for detecting and counting particles which are normally present or may be contained as contaminants in any suitable medium, notably a liquid or gaseous fluid, or in a food product or hygiene product, comprising depositing said particles (60) on a support (50), sweeping the surface of the support which carries said particles by means of a light beam, recording the fluorescent signals emitted by said particles, said process being characterised in that:
- said particles are rendered fluorescent by means of at least one suitable dye selected from the group comprising the vital dyes, positively viable dyes and fluorescence substances carried by antibodies and/or nucleic probes, and
- in that it comprises, for detecting said particles and counting them to the nearest unit, apart from detecting and record the fluorescence signals emitted by said particles:
  . the production of an electric positioning signal corresponding to the position of the beam on the support surface (50),
  . the recording and counting of the electrical signals detected resulting from the fluorescence of the particles
  . and the recording of the positional signals, so that each particle present on the surface of said support is counted and its position is simultaneously recorded.

12. A process according to claim 11, characterised in that the particles to be analysed are deposited, during the first step, on a continuous or discontinuous filter support having a surface area greater than 1 cm², notably a filter membrane, by filtering the sample which is to be analysed.

13. A process according to claim 11 or 12, characterised in that the sample is first solubilised, for the purposes of the filtering step.

14. A process according to claim 11, characterised in that the particles to be analysed are deposited, during the first step, on a continuous or discontinuous non-filtering solid support, notably a slide of the same kind as those used in optical microscopy.

15. A process according to any one of claims 11 to 14, characterised in that the particles are made fluorescent prior to being deposited on said solid support.

16. A process according to any one of claims 11 to 14, characterised in that the particles are made fluorescent in situ, ie. on the solid support.

17. A process according to any one of claims 11 to 16, characterised in that the antibodies are selected from the group comprising polyclonal and/or monoclonal, mono- or poly specific, anti-yeast and/or anti-bacterial and/or anti-mildew and/or anti-parasitic and/or anti-viral and/or anti-animal cell and/or anti-plant cell antibodies, and polyclonal or monoclonal, mono- or poly generic, anti-yeast and/or anti-bacterial and/or anti-mildew and/or anti-parasitic and/or anti-virus and/or anti-animal cell and/or anti-plant cell, particularly anti-pollen antibodies.

**Patentansprüche**

1. Apparat zum Nachweis und zur Zählung von Teilchen, die normalerweise oder möglicherweise als Verschmutzungen in einem flüssigen oder gasförmigen Strömungsmittel oder in einem Nahrungsmittel- oder Hygieneerzeugnis vorliegen, durch Fluoreszenzanalyse, mit einer Lichtquelle (10), mindestens einer Nachweiseinrichtung (40) zum Nachweis des fluoreszierenden Lichtes, das von den vorliegenden fluoreszierenden Partikeln (60) emittiert wird, und zur Erzeugung eines elektrischen Signals, einem Träger (50) für die genannten Partikel und einer Einrichtung (21, 31, 35) zum Abtasten der Oberfläche des genannten Trägers mit dem genannten Lichtstrahl, dadurch gekennzeichnet,

   * daß er außer einer Einrichtung (12) zur Fokussierung des aus der genannten Lichtquelle hervorgegangenen Strahles folgendes aufweist:
     - eine Einrichtung zur Erzeugung von Positionssignalen, die mit der genannten Abtasteinrichtung zusammenwirkt, um ein elektrisches Signal zu erzeugen, das der Lage des Bündels auf dem Träger entspricht, und
     - einen Verarbeitungs-Mikroprozessor (45), der betrieblich mit der bzw. den genannten Nachweiseinrichtung(en) und der genannten Einrichtung zur Erzeugung von Positionssignalen verbunden ist, und der mit mindestens einer Einrichtung zum Aufzeichnen und gleichzeitigen Zählen elektrischer Signale versehen ist, die durch die Nachweisvorrichtung(en) (40) und das Abtastsystem (21, 31, 35) übertragen werden, so daß die Position und eine Schätzung der Größe eines jeden nachgewiesenen und/oder gezählten Teilchens gleichzeitig aufgezeichnet werden, und
   * daß die genannte Abtasteinrichtung die gesamte zu analysierende Oberfläche abtastet.

2. Apparat nach Anspruch 1, dadurch gekennzeichnet, daß die Abtasteinrichtung einen ersten oszillierenden Spiegel (21) aufweist, dessen Schwingungsachse (22) senkrecht zur Achse des Lichtstrahles (11) steht, wobei der genannte erste Spiegel die rasche Abtastung einer Zeile durch den genannten Strahl sicherstellt, und einen zweiten Spiegel (31), dessen Achse (32) senkrecht zur Schwingungsachse des genannten ersten Spiegels steht.

3. Apparat nach Anspruch 1 oder Anspruch 2, dadurch gekennzeichnet, daß der genannte zweite Spiegel (31) zu einer langsamen Abtastbewegung angeregt ist, die mit der Abtastbewegung des ersten Spiegels synchronisiert ist, wobei ein Versetzungsschritt des Leuchtpunktes (13), der erzeugt ist durch das Auftreffen des Lichtstrahles (11) auf den festen Träger (50), auf dem festen Träger im wesentlichen in der Größenordnung des Durchmessers dieses Leuchtpunktes liegt, und wobei der genannte zweite Spiegel die Abtastung der gesamten Oberfläche des zu analysierenden Trägers durch den genannten Strahl in aufeinanderfolgenden Zeilen sicherstellt.

4. Apparat nach irgendeinem der Ansprüche 1 bis 3, dadurch gekennzeichnet, daß die Abtasteinrichtung außerdem einen dritten, dichroitischen Spiegel (35) aufweist, der auf der Bahn des vom zweiten Spiegel (31) reflektierten Strahles gelegen ist und der den genannten Strahl gegen den zu analysierenden (50) ablenkt.

5. Apparat nach irgendeinem der Ansprüche 1 bis 4, dadurch gekennzeichnet, daß er zusätzlich oberhalb der Nachweiseinrichtung(en) (40) für das fluoreszierende Licht mindestens einen anderen dichroitischen Spiegel (36) aufweist, der auf der Bahn der genannten fluoreszierenden Lichterscheinungen gelegen ist und die genannten Lichterscheinungen in ihre Komponenten zerlegt.

6. Apparat nach Anspruch 1 oder Anspruch 3, dadurch gekennzeichnet, daß der genannte zweite Spiegel (35) ein fester dichroitischer Spiegel ist, wobei die Abtastung der gesamten Oberfläche des zu analysierenden Trägers (50) durch den Lichtstrahl (11) durch eine Schiebeplatte (51) sichergestellt ist, die den genannten Träger trägt sowie zu einer Translationsbewegung angeregt ist, die mit der Abtastbewegung des ersten Spiegels (21) synchronisiert ist, und deren Schrittgröße im wesentlichen in der Größenordnung des Durchmessers des Leuchtpunktes (13) liegt.

7. Apparat nach irgendeinem der Ansprüche 1 bis 6, dadurch gekennzeichnet, daß die Lichtquelle (10) ein Laserstrahl ist.

8. Apparat nach Anspruch 1, dadurch gekennzeichnet, daß die Abtasteinrichtung zwei akustisch-optische Systeme aufweist, wobei das eine der Systeme die Abtastung einer Zeile des zu analysierenden Trägers durch den Lichtstrahl sicherstellt, das zweite akustischoptische System die Abtastung der gesamten Oberfläche des genannten Trägers sicherstellt, und das genannte zweite System mit dem ersten System synchronisiert ist.

9. Apparat nach irgendeinem der Ansprüche 1 bis 8, dadurch gekennzeichnet, daß der Träger (50) ein kontinuierlicher oder diskontinuierlicher, filternder Träger ist, insbesondere eine Filtermembran mit einer Oberfläche in der Größenordnung von vorzugsweise mehr als 1 cm$^2$.

10. Apparat nach irgendeinem der Ansprüche 1 bis 8, dadurch gekennzeichnet, daß der feste Träger (50) ein kontinuierlicher oder diskontinuierlicher, nicht-filternder Träger ist.

11. Verfahren zum Nachweis und zur Zählung von Teilchen, die normalerweise oder möglicherweise als Verschmutzungen in einem geeigneten Medium enthalten sind, insbesondere einem flüssigen oder gasförmigen Strömungsmittel oder in einem Lebensmittel- oder Hygieneerzeugnis, mit der Ablagerung der genannten Teilchen (60) auf einem Träger (50), der Abtastung der Oberfläche des genannten Trägers, der die genannten Teilchen trägt, mit einem Lichtstrahl, und der Aufzeichnung der Fluoreszenzsignale, die von den genannten Teilchen emittiert werden, wobei das genannte Verfahren dadurch gekennzeichnet ist, daß

- die genannten Teilchen mittels mindestens eines geeigneten Färbemittels fluoreszierend gemacht werden, das aus der Gruppe ausgewählt ist, die Lebendfarbstoffe, die Farbstoffe mit positiver Lebensfähigkeit und fluoreszierende Substanzen, die von Antikörpern und/oder Nukleinsäure-Sonden getragen sind, umfaßt, und
- daß es für den Nachweis und die bis auf das einzelne Teilchen genaue Zählung außer der Ermittlung und der Aufzeichnung der von den genannten Teilchen emittierten Fluoreszenzsignale folgendes aufweist:
  . die Erzeugung eines elektrischen Positionssignales entsprechend der Lage des Strahles auf der Oberfläche des Trägers (50),
  . die Aufzeichnung und Zählung der ermittelten elektrischen Signale, die sich aus der Fluoreszenz der Teilchen ergeben, und
  . die derartige Aufzeichnung der Positionssignale, daß jedes Teilchen, das an der Oberfläche des genannten Trägers vorliegt, gezählt wird und daß gleichzeitig seine Position aufgezeichnet wird.

12. Verfahren nach Anspruch 11, dadurch gekennzeichnet, daß die zu analysierenden Teilchen im Verlauf des ersten Schrittes auf einem kontinuierlichen oder nichtkontinuierlichen, filtrierenden Träger mit einer Oberfläche, die größer ist als 1 cm$^2$, insbesondere einer Filtermembran, durch Filtern der zu analysierenden Probe abgelagert werden.

13. Verfahren nach Anspruch 11 oder Anspruch 12, dadurch gekennzeichnet, daß man angesichts des Filtrierungsschrittes zunächst eine Solubilisierung der Probe durchführt.

14. Verfahren nach Anspruch 11, dadurch gekennzeichnet, daß die zu analysierenden Teilchen im Verlauf des ersten Schrittes auf einem kontinuierlichen oder nichtkontinuierlichen, festen Träger abgelagert werden, insbesondere auf einem Streifen jener Art, wie sie bei der optischen Mikroskopie verwendet werden.

15. Verfahren nach irgendeinem der Ansprüche 11 bis 14, dadurch gekennzeichnet, daß die Teilchen vor ihrer Ablagerung auf dem genannten festen Träger fluoreszierend gemacht werden.

16. Verfahren nach irgendeinem der Ansprüche 11 bis 14, dadurch gekennzeichnet, daß die Teilchen in situ, d.h. auf dem festen Träger, fluoreszierend gemacht werden.

17. Verfahren nach einem der Ansprüche 11 bis 16, dadurch gekennzeichnet, daß die Antikörper aus der Gruppe umfassend polyklonale und/oder monoklonale mono- oder polyspezifische Antikörper gegen Hefen und/oder gegen Bakterien und/oder gegen Schimmelpilze und/ oder gegen Parasiten und/oder gegen Viren und/oder gegen tierische Zellen und/oder gegen pflanzliche Zellen und polyklonale und/oder monoklonale mono- oder polygenerische Antikörper gegen Hefen und/ oder gegen Bakterien und/oder gegen Schimmelpilze und/oder gegen Parasiten und/oder gegen Viren und/oder gegen tierische Zellen und/oder gegen pflanzliche Zellen, insbesondere gegen Pollen, ausgewählt werden.

FIG.1

EP 0 333 561 B1

FIG.2

EP 0 333 561 B1

FIG.3

FIG.4

## FIG.5

## FIG.6

FIG.7